# EUROPÄISCHE PATENTSCHRIFT

(11) **EP 2 670 625 B1**
(45) Veröffentlichungstag und Bekanntmachung des Hinweises auf die Patenterteilung: **25.03.2015**
(21) Anmeldenummer: 11735648.5
(22) Anmeldetag: 25.07.2011
(51) Int. Cl.: B62B 7/14, B62B 9/10, A47D 13/02, B60N 2/28

(54) **BABYTRÄGER IN FORM EINES SCHALENSITZES**
BAY CARRIING DEVICE IN THE FORM OF A SHELL
SUPPORT D'ENFANT DANS LA FORME D'UNE COQUILLE

(30) Priorität: 31.01.2011 DE 202011000229 U
(43) Veröffentlichungstag der Anmeldung: 11.12.2013
(73) Patentinhaber: Curt Würstl Vermögensverwaltungs-GmbH & Co. KG, 95032 Hof (DE)
(72) Erfinder: WÜRSTL, Jan-Stefan, 95194 Regnitzlosau (DE)
(74) Vertreter: Pröll, Jürgen
(86) Internationale Anmeldenummer: PCT/EP2011/062716
(87) Internationale Veröffentlichungsnummer: WO 2012/103964

(56) Entgegenhaltungen:
- DE-U1-202006 014 114
- US-A- 5 115 523

## Beschreibung

Die Erfindung betrifft einen Babyträger in Form eines Schalensitzes mit den im Oberbegriff des Anspruchs 1 angegebenen Merkmalen.

Aus der DE 20 2006 014 114 U1 ist ein Babyträger in Form eines Schalensitzes bekannt, der einen Innenbereich mit einer Sitzfläche für das Halten eines Babys bildet und Seitenwände, einen Tragebügel, der zumindest mittels eines Halteschwenkgelenkes an der Außenseite einer Seitenwand befestigt ist und eine Unterseite mit einem Paar integrierter, aus der Seitenwand ausgeformter Kufen mit Bodenkontaktflächen aufweist. Ferner weist der Babyträger einen die Seitenwände im Rückenlehnenbereich verbindenden Querholm oder eine Verbindungswand und eine eingesetzte Rückenlehne auf, die gegenüber der Sitzfläche im Neigungswinkel um eine untere Schwenkachse verstellbar angeordnet ist. An der Rückenlehne ist rückseitig mindestens eine zentrisch vorstehende Stützwand oder es sind beidseitig an den Seiten vorstehende Stützwände mit einem Loch- oder Ausnehmungsraster im Schwenkradiüsbereich der Rückenlehne vorgesehen. Das Loch- oder Ausnehmungsraster wirkt mit ausrückbaren, im Schalensitz fest verankerten Rastmitteln zusammen. Alternativ kann rückseitig ein Bügel oder eine Stütze vorgesehen sein, der oder die in Rastausnehmungen an der Verbindungswand einstellbar sind. In einer weiteren Alternative ist vorgesehen, dass die Rückenlehne mit der Schwenkachse oder gegenüber dieser um ein bestimmtes Maß in Längsrichtung nach unten vorziehbar ist und mit seitlichen Rastsprüngen in eine Reihe von Rastausnehmungen an den Innenseiten der Seitenwände einrastbar ist, wodurch eine schrittweise Neigungswinkelverstellung gewährleistet ist.

Ein Babyträger in Form eines Schalensitzes, der in einem bestimmten Halter angeordnet ist, ist ferner aus US-A-5 115 523 und aus der EP 0 371 524 A1 bekannt. Des Weiteren ist ein Schalensitz als Babyträger gemäß der gattungsgemäßen Ausführung aus der EP 0 218 444 B1 und aus der DE 42 08 599 C2 bekannt.

Ein Kindersitz besonderer Art, der auch als Babyträger benutzt werden kann und aus drei Teilen zusammengesetzt ist, ist aus der DE 103 36 167 B3 und der EP 1 481 616 B1 bekannt. Dieser Sitz zeichnet sich durch einen U-förmige Träger aus, an dem Schwenkgelenke eines Tragebügels befestigt sind. Zwischen den Seitenwänden des U-förmigen Trägers sind sowohl ein Sitzteil als auch ein Rückenlehnenteil relativ gegeneinander und gegenüber dem U-förmigen Träger verschwenkbar angeordnet. Dadurch ist eine Umstellung auf eine Benutzungsvariante als Babybett möglich. Die Unterseite des U-förmigen Trägers ist ebenfalls gebogen ausgeführt, wodurch eine Wippfunktion realisierbar ist.

Ein Babyträger, bestehend aus zwei gelenkig miteinander verbundenen Teilen, nämlich einem Sitzteil und einem Rückenlehnenteil mit Seitenarmen ist aus der DE 692 14 778 T2 (EP 0 545 185 B1) bekannt. Durch das einstellbare Schwenkgelenk lassen sich dabei verschiedene Schrägstellungen der Rückenlehne gegenüber dem Sitzteil realisieren. Das Schwenkgelenk dient zugleich als Drehgelenk für den Tragebügel. Die gesamten Belastungen, die durch das sitzende Baby auf den Babyträger erfolgen, werden dabei vom Gelenk aufgenommen.

Bei Babyträgern der gattungsgemäßen Art, die auch als Puppenträger benutzt werden oder in verkleinerter Form als solche ausgestaltet sein können, kann die Rückenlehne zwar in gewissen Bereichen, gekoppelt mit einer Verschiebebewegung, im Neigungswinkel verstellt werden, ebenso können bei Kindersitzen, die geteilte Formen aufweisen, die Rückenlehne gegenüber dem Sitzteil im Neigungswinkel verstellt werden. Die Handhabung ist jedoch relativ kompliziert und dann, wenn ein Kleinkind im Babyträger sitzt, praktisch nicht möglich, da die zu bewegenden Elemente und Rastmittel nicht zugänglich sind.

Ausgehend vom Stand der Technik liegt der Erfindung die Aufgabe zu Grunde, einen Babyträger mit einem verstellbaren Sitzelement und/oder Rückenlehnenelement derart zu verbessern, dass eine einfache und schnell handhabbare Neigungswinkelverstellung mindestens eines der Teile ermöglicht wird und in Kombination beide Teile in gewünschter Weise im Neigungswinkel verstellbar sind, um einen höheren Liege- und Sitzkomfort zu erreichen. Die Neigungswinkelverstellung soll auch dann möglich sein, wenn in dem Babyträger ein Kleinkind bzw. eine Puppe sitzt.

Die Aufgabe löst die Erfindung durch Ausgestaltung des Babyträgers gemäß der im Anspruch 1 angegebenen technischen Lehre, wonach das im Neigungswinkel verstellbare Sitz- oder das Rückenlehnenelement mit seinem äußeren oberen Ende an der zugeordneten Stirnwand schwehkbeweglich um eine quer zur Längsachse des Babyträgers verlaufende Achse gelagert ist und das andere innere untere Ende des Sitz- oder Rückenlehrienelementes mit seitlich nach außen vorstehenden Lagerbolzen in Kulissen einer schwenkbar an den Seitenwänden gelagerten, manuell betätigbaren Hebevorrichtung in Wirkverbindung steht, mittels der das schwenkbar gelagerte Element aus einer abgesenkten Sitzposition in eine Liegeposition hochstellbar ist.

Die Kulisse oder Leitkurve, die in oder an der Hebevorrichtung vorgesehen ist, bewirkt bei einem Verschwenken der Hebevorrichtung eine Verschiebung der Schwenkachse, die durch die Lagerbolzen definiert ist, um die durch die unterschiedlichen Schwenkradien des Sitz- oder Rückenlehnenelementes einerseits und der Hebevorrichtung andererseits gegebenen unterschiedlichen Positionen zwischen Schwenkachse und Lagerbolzen bei gleichzeitiger Höhenverstellung auszugleichen. Die Kulisse ist ferner so ausgebildet, dass in gewünschter Weise eine Anhebung des Sitz- oder des Rückenlehnenelementes, je nachdem, welches damit gekoppelt ist, aus einer unteren Sitzposition in eine angehobenen Liegeposition beim Verschwenken der Hebevorrichtung automatisch erfolgt. Durch die schwenkbewegliche Lagerung des jeweiligen Elementes an der zugeordneten Stirnfläche ist ersichtlich, dass hier eine festliegende Schwenkachse gegeben ist. Um diese Schwenkachse wird das Element durch die Hebevorrichtung nach oben verschwenkt bzw. nach unten abgesenkt, wobei die Lagerbolzen in der Kulisse verschoben werden. Zu diesem Zweck sind die an den Stirnwände vorgesehenen Drehlager der seitlichen Hebevorrichtungen oberhalb der höchsten Positionseinstellung des damit gekoppelten Elementes angeordnet.

Die Hebevorrichtung selbst kann aus beidseitig an den Innenseiten der Seitenwände des Schalensitzes angebrachten, in etwa dreieckförmigen Segmentscheiben, die entweder bewegungsgekoppelt sind, beispielsweise über eine quer verlaufende untere Stange, oder einzeln betätigbar sind und auch Handgriffe aufweisen können, um ein Verschwenken in gewünschter Weise zu ermöglichen, bestehen. In diese Segmentscheibe ist die Kulisse entsprechend dem gewünschten Bewegungsablauf eingebracht, so dass beim Verschwenken der jeweilige Lagerbolzen in der Kulisse entlanggleitet kann. Durch Einbringung von Fallen oder Senken in die unteren Gleitbolzen der Kulisse können mehrere Zwischenstellungen bei der Neigungswinkelverstellung eingenommen werden. Die Endstellung sollte durch das Ende der Kulisse definiert sein bzw. kann die Kulissenbahn dann so ausgestaltet sein oder der Schwenkwinkel der Hebevorrichtung so begrenzt sein, dass keine weitere Anhebung mit Erreichen der höchsten Position möglich ist. Die Kulisse verläuft zwischen dem seitlichen Ende des kurzen oberen Schenkels der Segmentscheibe und dem Ende des langen, etwa im 90°-Winkel angeordneten zweiten Schenkels. Selbstverständlich kann die Hebevorrichtung auch aus einem Kunststoffformteil bestehen, das keine Flächen aufweist, sondern nur rahmenförmig oder L-förmig ausgebildet ist. An diesem Kunststoffformteil kann der Lagerzapfen oder eine Lagerbuchse mit angeformt sein, der in ein Lager in der Seitenwand einsteckbar oder die auf einen Lägerbolzen aufziehbar ist. Eine andere Befestigung, beispielsweise mittels Schraube oder Niete oder mittels Kunststofflager, ist auch möglich.

Die Erfindung ist aber auch dann anwendbar, wenn beide Elemente, nämlich das Sitzelement und das Rückenlehnenelement, gleichzeitig im Neigungswinkel zueinander und gegenüber den Schalensitzstirnwänden verstellbar sind. Zu diesem Zweck ist vorgesehen, dass dasjenige Element, das nicht um die horizontale Schwenkachse mit seinem äußeren Ende an der zugeordneten Stirnwand gelagert ist, mit dem äußeren Ende verschiebbar an der Innenseite der zugeordneten Stirnwand und/oder mit seitlichen Streifen anliegt und/oder mit seitlichen Streifen in X-förmigen Führungen an den Innenseiten der Seitenwände seitlich geführt ist, während das andere, innere Ende schwenkbeweglich mit dem inneren Ende des anderen Elementes verbunden ist. Durch die schwenkbewegliche Kopplung beider Elemente im Bereich der beiden seitlichen Lagerbolzen an dem einen Element, erfolgt durch Mitkopplung eine unmittelbare Bewegungstransformation zwischen den Elementen. Das zweite Element, beispielsweise das Rückenelement, muss dabei der tatsächlichen Länge beider Elemente im gestreckten und geknickten Zustand folgen können und liegt deshalb gleitend an der zugeordneten Stirnwand an bzw. kann sich in der X-förmigen seitlichen Führung mit einem eingreifenden streifenförmigen Führungsteil bewegen, wobei die X-Form erforderlich ist, um die gleichzeitige Schwenk- und Schiebebewegung ausgleichen zu können. Die Rückenlehne kann selbstverständlich auch Seitenschutzteile für den Kopf des Kleinkindes aufweisen.

Grundsätzlich kann die Hebevorrichtung sichtbar angeordnet sein. Sie kann aber auch hinter einem Polster, das ohnehin in einem Babyträger eingesetzt wird, verdeckt sein. Das Verschwenken der Hebevorrichtung ist stets möglich, zu welchem Zweck die Segmentscheibe, der Segmentrahmen oder L-Träger aus der Ebene der Seitenwand innenseitig vorstehen und stets mit einer Hand fassbar sind.

Die schwenkbewegliche Verbindung zwischen dem Rückenlehnenelement und dem Sitzelement kann beispielsweise durch dämmende Scharnierabschnitte an den Elementen hergestellt werden, die über Bolzen miteinander verbindbar sind. In einfachster Ausführung kann das Sitzelement auch am untenseitigen Ende seitliche stegförmige Verlängerungen aufweisen, an denen die nach außen vorstehenden Lagerbolzen vorgesehen sind, die miteinander über eine runde Achse verbunden sind oder nach innen vorstehende Lagerbolzen aufweisen, auf die das Rückenlehnenelement mit einem in der Breite angepassten Abschnitt mit einer Aufrastnut oder Nuten aufdrückbar ist. Beide Teile sind dadurch ebenfalls schwenkbeweglich miteinander verbunden. Des Weiteren ist aber auch eine einfache Montage des Rückenlehnenelementes auf diesen vorstehenden Bolzenteilen oder einer durchgehenden, runden Stange möglich. Jede andere scharnierartige Verbindung ist aber auch hier einsetzbar.

Wenn die Schwenkachse der Hebevorrichtung kongruent zur Schwenkachse des Tragebügels liegt, ist es auf einfache Weise möglich, die Hebevorrichtung über eine feste oder lösbare Kupplung mit dem drehbeweglichen Lager des Tragebügels zu verbinden, so dass beim Verschwenken des Tragebügels die Hebevorrichtung automatisch mitbetätigt wird. Dies hat den Vorteil, dass eine manuelle Betätigung innerhalb des Sitzes überhaupt nicht mehr erfolgen muss, sondern durch Umlegen des Tragebügels um einen definierten Winkel automatisch die Hebevorrichtung mit betätigt wird. Wenn dies nicht gewünscht ist, also die beiden Elemente in der schrägen Sitzposition verbleiben sollen, was beispielsweise beim Benutzen des Babyträgers in einem Kraftfahrzeug während der Fahrt erforderlich ist, kann durch Betätigen der Kupplung die Verbindung zwischen den drehbeweglichen Lagerteilen aufgelöst werden, so dass der Tragebügel unabhängig bedienbar ist.

Eine lösbare Kupplung kann beispielsweise dadurch realisiert werden, dass an dem Schwenkgelenk des Tragebügels eine Taste vorsteht, über die ein Kupplungsbolzen oder - schieber verschiebbar ist, der durch eine Bohrung in einer Drehbuchse in eine Bohrung im Drehbolzen der Hebevorrichtung eindrückbar ist und bei entgegengesetzter oder nochmaliger Betätigung, beispielsweise unter Ausnutzung einer Rastmechanik mit Feder- und Herzkurve wieder ausrückbar ist. Ebenso kann aber auch eine Kniehebelrastung oder ein einfacher Schieber vorgesehen sein. Dadurch ist es möglich, den Tragebügel aus der Trageposition nach hinten über die Rückenlehne zu schwenken und im hinteren Bereich des Schalensitzes enden zu lassen, ohne dass die Hebevorrichtung betätigt wird. Wenn der Sitz auf einen Fahrzeugsitz montiert wird, darf z. B. der Tragebügel zur Meidung von Verletzungen nicht nach oben stehen. Ebenso muss der Babyträger sich dann in der Sitzposition befinden. Der Sitz bleibt dann auch in einer Position. Wird hingegen der Babyträger aus der Aufnahme des Kraftfahrzeugs herausgenommen und als Liegesitz z. B. im häuslichen Bereich benutzt, so kann durch Einrasten der Kupplung bewirkt werden, dass beim Umlegen des Tragebügels nach hinten gleichzeitig über die Hebevorrichtung die Lagerbolzen angehoben werden und dadurch beide Elemente zueinander in einer Liegeposition verbracht werden können. Soll das Kind hingegen wieder getragen werden, so ist es erforderlich, den Tragebügel hochzuschwenken, wodurch automatisch die verbindende Achse nach unten abgesenkt wird. Die Kopplung kann aber auch hierbei unwirksam geschaltet werden, so dass das Kleinkind auch liegend getragen werden kann. Durch Fangausnehmungen in der Kulisse können auch unterschiedliche Positionen durch Schrägstellungen der Elemente eingestellt werden, wobei durch Aufbringung einer definierten Überhubkraft die Lagerbolzen aus den Fallen der Kulisse automatisch herausgedrückt und die Bewegung der Verstellachse beider Teile in der jeweiligen Endstellung möglich ist.

Grundsätzlich kann der Tragebügel, wie üblicherweise gegeben, außenseitig über Schwenkgelenke an den Seitenwänden angelenkt sein. Er kann aber auch innenseitig angelenkt sein und in Verlängerung zu den Gelenken je eine Hebevorrichtung aufweisen. Der Tragebügel, der üblicherweise aus Kunststoff besteht, kann somit auch seitlich an den Gelenken angeformte Hebevorrichtungen aufweisen. Ebenso können die anderen Rastmittel bekannter Art an den Schwenkgelenken des Tragebügels vorgesehen sein, um diesen in den jeweiligen Stellungen, beispielsweise in der vorgekläppten, zurückgeklappten oder in der aufgestellten Position, gesichert zu halten. Die bekannten Rastmittel können dabei eine Auswirkung auf die Hebevorrichtung haben, wenn z. B. in der aufgestellten Position der Tragebügel hierüber verrastet ist, dann ist die abgesenkte Position der Elemente ebenfalls gesichert. Auch bei umgelegtem Tragebügel, beispielsweise nach dem Verbringen nach hinten über das Kopfende des Rückenlehnenelementes, kann eine Verrastung vorgesehen sein, die die Liegeposition fixiert.

Auch kann ein Babyträger nach der Erfindung einen Schalensitz aufweisen, der untenseitig an den Seitenwänden beispielsweise kufenförmig ausgestaltet ist und Befestigungsvorrichtungen zum Fixieren des Babyträgers an Fixpunkten eines Kinderwagens oder eines ISOFIX-Basisträgers an einem Fahrzeugsitz eines Kraftfahrzeuges aufweist.

Ein Babyträger der beschriebenen Art kann grundsätzlich auch mit bekannten Gurtsystemen bestückt sein, um ein Kleinkind in dem Babyträger gesichert halten zu können. Hierzu kann beispielsweise an dem Sitzelement achsmittig in einem bestimmten Abstand zum unteren Ende des Sitzelementes aus der Ebene ein Schrittgurt vorstehen, der z. B. einen Schlosskasten zur Aufnahme von Schlosszungen an Hosenträgergurten aufweist, die an der Rückenlehne, vorzugsweise durch die rückseitige Stirnwand hindurchgeführt, in der Länge verstellbar sind. Solche Anordnungen sind üblich bei bekannten Babyträgern, die sich entsprechend dem Erfindungsgegenstand in dem Neigungswinkel nicht verstellen lassen. Es ist ersichtlich, dass dann, wenn Sitz- und Rückenlehnenelement aus einer Sitzposition in eine Liegeposition durch die angegebene Höhenverstelleinrichtung, nämlich einer Excenterführung, verbracht werden, in der wirksamen Anliegelänge am Körper sich verändern. Die wirksame Gurtlänge zwischen Schrittgurt und Ende des Schultergurtes wird praktisch gegenüber dem gestreckten Körper verkürzt. Dies kann man selbstverständlich durch Nachstellen der Längen der Schultergurte ausgleichen.

In einer erfindungsgemäßen Ausgestaltungsform ist vorgesehen, dass der achsmittig aus der Ebene des Sitzelementes vorstehende Schrittgurt, an dem ein am Rückenlehnenelement fixiertes Hosenträgergurtsystem befestigbar ist, in der vorstehenden Länge einstellbar ist. Dies kann beispielsweise durch eine Aufwickelvorrichtung, die von Hand bedienbar ist, geschehen, wenn der Gurt durch einen Spalt durch das Sitzelement hindurchgeführt ist und sich die Aufwickelvorrichtung zugänglich an der Vorderseite der vorderen Stirnwand befindet. Diese Aufwickelvorrichtung kann beispielsweise mit einem Rastgesperre in Wirkverbindung stehen, um den Gurt in den verschiedenen Ausziehlängen arretieren zu können.

Der Schrittgurt kann aber auch in Abhängigkeit von der Sitz- und Liegeposition des Sitzelementes unmittelbar einstellbar sein, zu welchem Zweck er mit seinem unteren Ende unterhalb, vor oder hinter der Schwenkachse des Sitzelementes an der Stirnwand fixiert ist und um ein Führungselement gelegt oder durch ein schlitzförmiges Führungselement hindurchgeführt ist, das in einer Führungsausnehmung in dem Sitzelement verschiebbar gelagert ist. Die Führungsausnehmung kann eine U-förmige Aüsnehmung sein, die stirnseitig eingebracht ist und deren Tiefe den Verschiebeweg des Führungselementes im Wesentlichen bestimmt und damit auch die zusätzlich frei werdende aktive Länge des Gurtsystems. Dieses Führungselement ist mindestens in den zwei Endpositionen innerhalb der Führungsausnehmung verbringbar. In der Sitzposition sollte es am weitesten gegenüber der Schwenkachse verschoben sein, in der Liegeposition hingegen nahe an der Schwenkachse des Sitzelementes liegen. Es ist ersichtlich, dass dadurch die Überstandslänge vergrößerbar ist, so dass, ergänzt durch die Hosenträgergurte, das System ein Vorrutschen des Kindes in der Liegeposition grundsätzlich ermöglicht, aber dennoch einen sicheren Halt bietet.

Der Längenausgleich kann automatisch erfolgen, zu welchem Zweck beispielsweise ein Führungselement vorderseitig am Gurt befestigt ist, der in oder an der Stirnwand vorderseitig umgelenkt und durch einen Führungsdurchbruch in den Innenraum des Schalensitzes geführt ist und nach einer Umlenkung im Bereich unterhalb des Endes des Sitzelementes nach oben am Sitzelement oder am Rückenelement befestigt ist. Zur Befestigung eignet sich beispielsweise eine angenähte Öse, durch die ein Bolzen des Scharniers zwischen Sitz- und Rückenlehnenelement hindurchsteckbar ist. Es ist ersichtlich, dass dann, wenn der Gurt so eingepasst ist, das Führungselement in der Sitzposition des Sitzelementes in der entferntesten Stellung zur Schwenkachse des Sitzelementes liegt und beim Hochschwenken des Sitzelementes, beim Verbringen in die Liegeposition, nach vorne gezogen wird, bis es in die Endposition gelangt. Der Schrittgurt selbst weist immer die gleiche Länge auf, so dass automatisch die aus der Ebene des Sitzelementes vorstehende, aktive Länge sich vergrößert und so ein Nachstellen der Länge der Hosengurte vermieden wird. Anstelle der angegebenen Verstellmöglichkeiten mittels eines Gurtes, kann selbstverständlich auch die Verstellung über ein Stangengetriebe oder eine von Hand ausführbare Verstellung über seitliche Rastenreihen an den Führungsausnehmungen bewerkstelligt werden, in die seitlich vorstehende Bolzen an dem Führungselement eingreifen und schrittweise verstellbar sind.

Die Erfindung wird nachfolgend anhand der in den Zeichnungen dargestellten Ausführungsbeispiele ergänzend erläutert.

In den Zeichnungen zeigen:
- Fig. 1: in einer perspektivischen Draufsicht einen Babyträger mit der erfindungsgemäß vorgesehenen Hebevorrichtung,
- Fig. 2: eine Seitenansicht des in Fig. 1 dargestellten Babyträgers mit gestrichelt eingezeichneter Hebevorrichtung,
- Fig. 3: den in Fig. 1 und 2 dargestellten Babyträger mit umgelegtem Tragebügel undvorgeschwenkter Hebevorrichtung in einer weiteren perspektivischen Draufsicht,
- Fig. 4: den Babyträger nach Fig. 3 in der Seitenansicht mit gestrichelt eingezeichneter Hebevorrichtung,
- Fig. 5: isoliert die Hebevorrichtung, zusammen mit einem Sitzelement und einem Rückenlehnenelement in vereinfachter Darstellung in Sitzposition,
- Fig. 6: in perspektivischer Darstellung die isoliert dargestellten Elemente in der Liegeposition,
- Fig. 7: einen Babyträger gemäß Fig. 1, jedoch ausgestattet mit einem Schrittgurt für ein nicht dargestelltes Gurtsystem in dem Babyträger,
- Fig. 8: die Positionierung des Schrittgurtes innerhalb einer Führungsausnehmung in dem Sitzelement in der Sitzposition,
- Fig. 9: eine Seitenansicht, in der das Führungselement für den Schrittgurt in die entfernteste Position zur Schwenkachse des Sitzelementes eingestellt ist,
- Fig. 10: eine Seitenansicht des in den Fig. 7 bis 9 dargestellten Babyträger, bei dem das Führungselement für den Schrittgurt beim Hochschwenken des Sitzelementes über einen Gurt nach vorne gezogen ist,
- Fig. 11: die eingenommene Position des Schrittgurtes bei Verstellen des Sitzelementes und des Rückenlehnenelementes in die Liegeposition und
- Fig. 12: eine isometrische Zeichnung des Babyträgers in der Liegeposition mit einem Schrittgurt.

In den Figuren ist ein Schalensitz 1 eines Babyträgers dargestellt, der ein Bodenteil 2, Seitenwände 3a und 3b sowie Stirnwände 4a und 4b aufweist. Ein solcher aus Kunststoff in Schaumspritztechnik oder in Blastechnik aus Kunststofffolie hergestellter Schalensitz 1 ist als solcher bekannt. An diesem Schalensitz 1 befindet sich außenseitig an den Seitenwänden 3a, 3b je ein Schwenklager 20 eines Tragebügels 17, der in verschiedene Schwenkstellungen verbringbar ist.

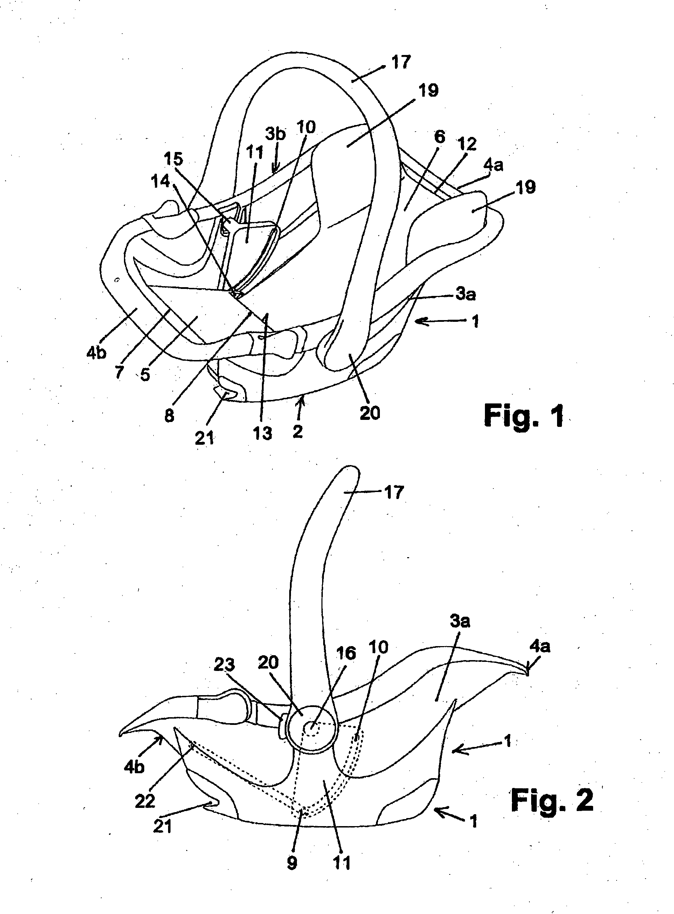

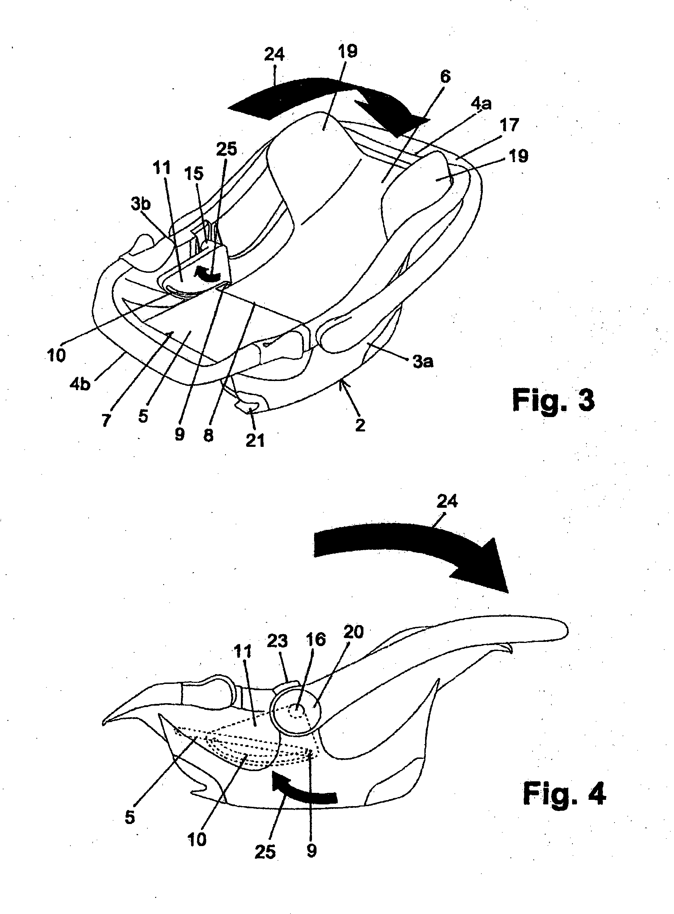

In den Fig. 1, 2 und 5 ist der Tragebügel 17 in der Trageposition senkrecht verlaufend eingezeichnet, in den Fig. 3, 4 und 6 in einer Kippposition, in der der Tragebügel 17 sich hinter dem Rückenlehnenelement 6 befindet und so den Blick auf den gesamten Babyträger freigibt. Das Schwenklager 20 des Tragebügels 17 ist im Detail nicht dargestellt. Es weist jedoch innenliegend Elemente auf, um in den jeweiligen Positionen zu verrasten. Über eine Rasttaste 23 ist die jeweilige Rastung wieder auflösbar, um den Tragebügel 17 in verschiedene Raststellungen verbringen zu können. Dies ist bekannt.

In den Schalensitz 1 sind ein Sitzelement 5 und ein Rückenlehnenelement 6 eingesetzt. Das Sitzelement 5 ist mit dem vorderen oberen Ende um eine Schwenkachse 22 verschwenkbar angeordnet und schließt sich praktisch an die Stirnwand 4b art. In einfachster Ausführung können seitliche Bolzen vorgesehen sein, die in Lagerausnehmungen in den Seitenwänden 3a und 3b einrasten. Um diese vordere Schwenkachse 22 ist das Sitzelement 5 nach oben und nach unten verschwenkbar. Das hintere untere Ende 8 bzw. das bis zum Bodenteil reichende Ende 8 des Sitzelementes 5 weist unten eine quer verlaufende Aussparung 14 auf, so dass seitlich überstehend zwei Schenkel vorgesehen sind, an denen Lagerbolzen 9 nach außen stehend befestigt sind. Des Weiteren sind diese Lagerbolzen 9 auf der inneren Seite der Schenkel jeweils verlängert und bilden ein Schwenklager für ein aufgestecktes oder aufgerastetes unteres Ende 13 eines Rückenlehnenelementes 6.

Das Rückenlehnenelement 6 ist wesentlich länger ausgebildet als das Sitzelement 5 und liegt mit dem oberen Ende 12 an einer Gleitfläche der Stirnwand 4a an, so dass es dieser gegenüber bei gleichzeitiger Neigungswinkelverstellung höhenverschiebbar ist. Die nach außen vorstehenden Lagerbölzen 9 greifen in je eine Kulisse 10 einer Hebevorrichtung 11 ein. Die Kulisse 10 bildet eine Leitkurve und ist bogenförmig ausgebildet. Die Hebevorrichtung 11 selbst ist in diesem Ausführungsbeispiel als Flächenelement, nämlich als Segmentscheibe ausgebildet, kann aber auch rahmenförmig ausgebildet sein. Sie bildet ein Dreieck, so dass die Kulisse 10 zwischen dem Ende am unteren langen Schenkel und dem Ende des oberen kürzeren Schenkels sich bogenförmig erstreckt. Die Länge der Kulisse 10 ist im Wesentlichen bestimmt durch den Verschwenkwinkel des Tragebügels 17, der fest mit der Schwenkachse 15 über den vorstehenden Bolzen 26 verbunden ist, sowie durch das gewünschte Absenkungsmaß. Der Bolzen 26 greift durch die Seitenwand 3a, 3b hindurch und erstreckt sich in das jeweilige Schwenklager 20 des Tragebügels 17. Durch eine nicht dargestellte Kupplung ist es auch möglich, den Bolzen 26 von dem Schwenkgelenk 20 zu entkoppeln, so dass der Tragebügel 17 unabhängig von der Hebevorrichtung 11 und bei eingerasteter Kupplung hiermit verschwenkt werden kann.

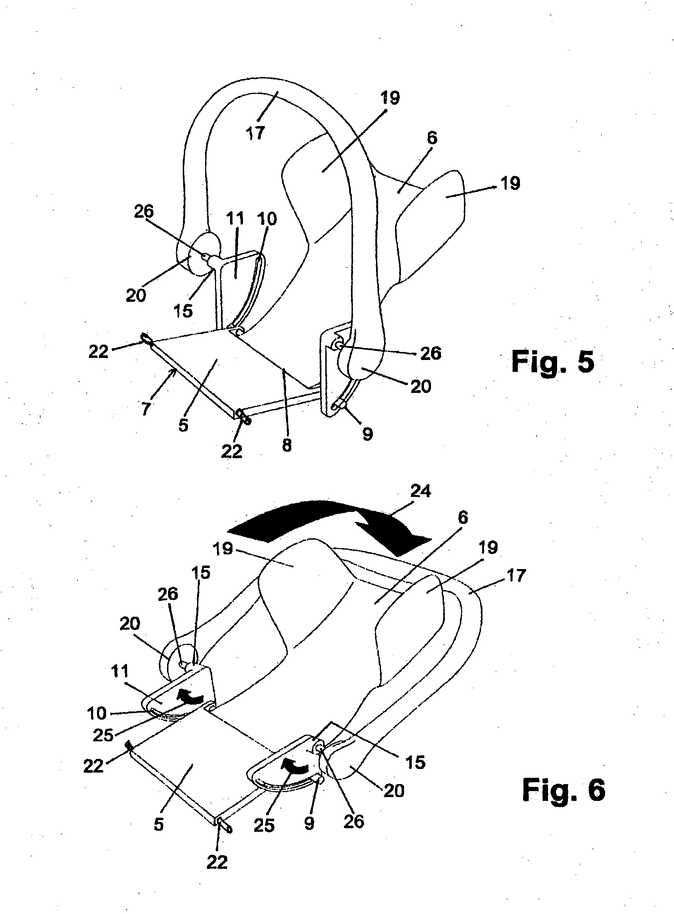

Unter der Annahme einer festen Kopplung nimmt die Hebevorrichtung 11 die in den Fig. 1, 2 und 5 eingezeichnete Position beim Tragen des Baby trägers ein, so dass das Sitzelement 5 schräg verlaufend unmittelbar oberhalb des Bodenteils 2 endet. Zugleich wird aber auch das Rückenlehnenelement 6 in eine solche maximale Schräglage mitgezogen, dass eine stark winklige Sitzanordnung zwischen den beiden Elementen 5 und 6 gegeben ist. Beim Verschwenken des Tragebügels 17 nach rechts bzw. nach hinten, wie anhand des Pfeils 24 angedeutet, wird automatisch die Hebevorrichtung 11 mit verschwenkt, und zwar nach vorne, und hebt und führt dabei die Lagerbolzen 9 längs der Kulisse 10. Diese Kulisse 10 ist so angelegt, dass durch den Schwenkradius automatisch das Sitzelement 5 um die Schwenkachse 22 nach oben verschwenkt wird, was aus den Fig. 3, 4 und 6 ersichtlich ist. In der Endstellung, in der die Lagerbolzen 9 in den hinteren Bereich der Kulisse 10 gelangen, ergänzen sich das Sitzelement 5 und das Rückenlehnenelement 6 zu einer leicht schrägen Liegefläche, die auch relativ eben ausgebildet werden kann; dies ist aus Fig. 6 ersichtlich. Zu diesem Zweck wird also der Tragebügel 16 nach hinten hinter die zum Schutz des Kopfes des Kleinkindes vorgesehenen Seitenschutzwände 19 des Rückenlehnenelementes 6 verschwenkt. Wird der Tragebügel 10 aus der Schrägstellung wieder aufgerichtet, also in die senkrechte Trageposition verbracht, so werden automatisch die Lagerbolzen 9 in der Kulisse 10 nach unten geführt, was aus den Fig. 1 und 2 sowie der Fig. 5 ersichtlich ist.

Die Schwenkachse 16 befindet sich oberhalb des Schwerpunktes des Babyträgers, damit ein ausgewogenes Tragen des Babyträgers möglich ist. In den Seitenwänden 3a, 3b, insbesondere an angesetzten kufenförmigen Teilen, sind ferner Aufnahmen 21 vorgesehen, damit der Sitz beispielsweise an ein ISOFIX-System an einem Kraftfahrzeug angedockt werden kann.

Die Erfindung ist nicht auf das dargestellte Ausführungsbeispiel beschränkt. Die verschwenkbare Hebevorrichtüng kann auch andere Formen, bis hin zu Kniegelenken mit eingesetzter Kulisse 10 aufweisen. Beispielsweise kann oben ein Haltesteg und daran ein nach unten sich erstreckender Steg vorgesehen sein, in welchem eine Kulisse 10 eingebracht ist. Auch braucht keine mechanische Kopplung zwischen dem Tragebügel 17 und der Hebevorrichtung 11 vorgesehen sein, die Achsen können beispielsweise auch untereinander oder nebeneinander liegen, wenn die Hebevorrichtung 11 manuell betätigbar ausgeführt ist. Ebenso kann der Tragebügel 17 auch innenseitig an den Seitenwänden 3a, 3b angelenkt sein; in diesem Fall kann die Hebevorrichtung 11 eine angeformte Hebevorrichtung sein, wenn der Tragebügel 17 aus Kunststoff besteht. Anstelle einer Kulisse 10 kann auch ein die Bolzen 9 untergreifender, gebogen ausgeführter Schenkel vorgesehen sein, auf dem der jeweilige Bolzen 9 beim Untergreifen entlanggleitet.

Um das Kind vollständig zu schützen und die Hebevorrichtung nicht sichtbar zu machen, können seitliche Innenpolster die Hebevorrichtung 11 vollends abdecken. Ebenso ist es möglich, die Kulisse 10 mit Fallen zu versehen, in die die Lagerbolzen 9 einrasten können, um die Elemente in verschiedenen Schrägstellungen fixieren zu können.

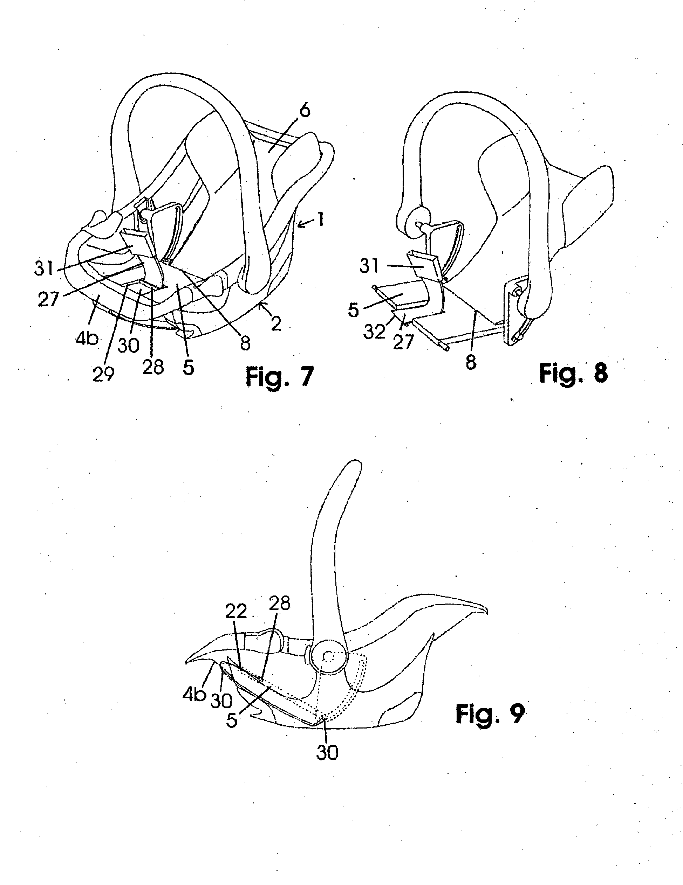

In den Fig. 7 bis 12 sind eine Ausführungsvariante des in den Fig. 1 bis 6 dargestellten Babyträgers abgebildet und deren zusätzlichen Komponenten dargestellt, die einen Schrittgurt 27, der in einem auf der Mittenachse des Sitzelementes in einer Führungsausnehmung 29 verschiebbar gelagerten Führungselement 28 geführt ist, umfassen. Dieser Schrittgurt 27 weist an seinem oberen Ende einen Schlosskasten 31 bekannter Art auf, in dem die Schlosszungen eines nicht dargestellten Hosenträgergurtsystems an dem Rückenlehnenelement 6 befestigbar sind. Der Schrittgurt 27 ist, wie aus Fig. 8 ersichtlich, vorderseitig mittels einer Fixierung 32 an der Stirnwand 4b befestigt und von unten nach oben durch das verschiebbare Führungselement 28 hindurchgeführt. In der Sitzposition des Sitzelementes 5, bei der das untere Ende 8 dem Bodenteil 2 des Schalensitzes 1 am nächsten kommt, befindet sich das Führungselement 28 in der unteren Position in der Führungsausnehmung 29, also am weitesten entfernt von der Schwenkachse 22 des Sitzelementes 5.

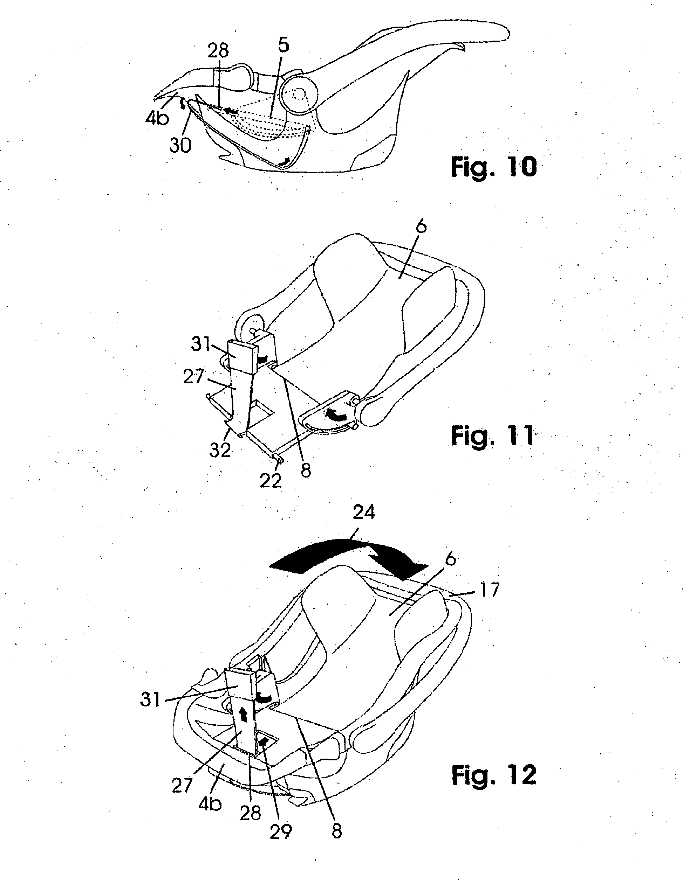

Im Ausführungsbeispiel in Fig. 9 ist ersichtlich, dass mit dem Führungselement 28 mit dem Schlitz zur Aufnahme des Schrittgurtes 27 ein Gurt 30 verbunden ist, der innerhalb eines Durchbruches in der Stirnwand 4b zunächst nach außen geführt und dann durch die Wand selbst im unteren Bereich wieder nach innen in den Schalensitz 1 hinein umgelenkt ist. Das unten vorstehende Ende ist an dem Sitzelement 5 befestigt, wie aus Fig. 9 ersichtlich ist. Wird nun durch die Exzenterführung der Hebeeinrichtung das Sitzelement 5 aus der Sitzposition in Fig. 9 in die Liegeposition gemäß den Fig. 10, 11 und 12 verbracht, so ist ersichtlich, dass auf den Gurt 30 eine Zugkraft ausgeübt wird, die automatisch das Führungselement 28 vorzieht und somit den Schrittgurt 27 in die Position verbringt, die in Fig. 11 dargestellt ist, nämlich nach vorne in den Bereich der Schwenkachse 32. Aus Fig. 12 ist ersichtlich, dass durch Umlegen des Tragebügels 17 entsprechend dem Pfeil 24 dies bewerkstelligt wird. Der Schrittgurt 27 kann sodann durch das Führungselement 28 um das Tiefenmaß der Führungsausnehmung nach,oben gezogen und damit die verfügbare reale Länge vergrößert werden, die erforderlich ist, damit das Kleinkind in der Liegeposition gesichert gehalten ist, aber nicht eingeklemmt wird.

### Bezugszeichenliste

- 1: Schalensitz
- 2: Bodenteil
- 3a: Seitenwand
- 3b: Seitenwand
- 4a: Stirnwand
- 4b: Stirnwand
- 5: Sitzelement
- 6: Rückenlehnenelement
- 7: Ende (Sitzelement oben)
- 8: Ende (Sitzelement unten)
- 9: Lagerbolzen
- 10: Kulisse
- 11: Hebevorrichtung
- 12: Ende (Rückenlehne oben)
- 13: Ende (Rückenlehne unten)
- 14: Aussparung
- 15: Schwenkachse
- 16: Schwenkachse
- 17: Tragebügel
- 19: Seiteneinsatz
- 20: Schwenklager
- 21: Aufnahme
- 22: Schwenkachse
- 23: Rasttaste
- 24: Pfeil
- 25: Pfeil
- 26: Bolzen
- 27: Schrittgurt
- 28.: Führungselement
- 29: Führungsausnehmung
- 30: Gurt
- 31: Schlosskasten
- 32: Fixierung

## Patentansprüche

1. Babyträger in Form eines Schalensitzes (1), bestehend aus einem Bodenteil (2), Seiten- (3a, 3b) und Stirnwänden (4a, 4b), in welchem ein Sitz- (5) und ein Rückenlehnenelement (6) integriert sind, von denen mindestens eines im Neigungswinkel verstellbar gelagert ist, und mit einem an den Seitenwänden (3a, 3b), im Wesentlichen auf der Schwerpunktachse des Babyträgers verschwenkbar gelagerten und mindestens in der senkrechten Tragstellung arretierbaren Tragebügel (17), wobei das im Neigungswinkel verstellbare Sitz- (5) oder das Rückenlehnenelement (6) mit seinem äußeren oberen Ende (7) an der zugeordneten Stirnwand (4b) schwenkbeweglich um eine quer zur Längsachse des Babyträgers verlaufende Achse gelagert ist, **dadurch gekennzeichnet, dass** das andere, innere, untere Ende (8) des Sitz- (5) oder Rückenlehnenelementes (6) mit seitlich nach außen vorstehenden Lagerbolzen (9) in Kulissen (10) jeweils einer schwenkbar an den Seitenwänden (3a, 3b) gelagerten, manuell betätigbaren Hebevorrichtung (11) in Wirkverbindung steht, mittels der das verschwenkbar gelagerten Element (5, 6) aus einer abgesenkten Sitzposition in eine Liegeposition hochstellbar ist.

2. Babyträger nach Anspruch 1, **dadurch gekennzeichnet, dass** dasjenige Element (6), das nicht um eine horizontale Schwenkachse mit seinem Ende an der zugeordneten Stirnwand gelagert ist, mit diesem Ende (12) verschiebbar an der zugeordneten Stirnwand (4a) anliegt oder in X-förmigen Führungen an den Innenseiten der Seitenwände (3a, 3b) seitlich geführt ist und mit dem anderen Ende (13) schwenkbeweglich an dem anderen Element (5) angebracht ist.

3. Babyträger nach Anspruch 2, **dadurch gekennzeichnet, dass** an der Stirnwand (4a), an der das Rückenlehnenelement (6) verschiebbar anliegt, eine Gleitfläche oder ein wulstförmiges Gleitelement quer verlaufend vorgesehen ist.

4. Babyträger nach Anspruch 2, **dadurch gekennzeichnet, dass** auf der inneren Schwenkachse des Elementes (5), das an der Stirnwand (4b) angelenkt ist und welche durch die beiden vorstehenden, seitlichen Bolzen (9) gebildet ist, die Drehachse der beiden miteinander verbundenen Sitz- (5) und Rückenelemente (6) vorgesehen ist.

5. Babyträger nach Anspruch 2, **dadurch gekennzeichnet, dass** in dem Sitzelement (5) mindestens eine Aussparung (14) im Bereich der Drehachse vorgesehen ist, in die das Ende (13) des unteren Abschnitts der Rückenlehne (6) scharnierartig eingreift und mittels Verbindungsbolzen verbunden ist.

6. Babyträger nach Anspruch 1 oder 2, **dadurch gekennzeichnet, dass** die Schwenkachse (15) der Hebevorrichtung (11) kongruent zur Schwenkachse des Tragebügels (17) liegt und dass über eine feste oder lösbare Kupplung die Achse des Tragebügels (17) mit der Schwenkachse (15) der Hebevorrichtung (11) verbunden ist.

7. Babyträger nach Anspruch 6, **dadurch gekennzeichnet, dass** in der Tragstellung des Tragebügels (17) die beiden Elemente (5, 6) die Sitzstellung einnehmen und beim Zurückschwenken des Tragebügels (17) in Richtung der rückseitigen Stirnfläche (4a) über die Kulissen sowohl das Sitz- (5) als auch das Rückenlehnenelement (6), das einseitig verschiebbar an der Stirnwand anliegt, nach oben in eine Liegeposition anhebbar sind.

8. Babyträger nach einem der vorhergehenden Ansprüche, **dadurch gekennzeichnet, dass** der Tragebügel (17) innen- oder außenseitig an den Seitenwändeb (3a, 3b) verschwenkbar gelagert ist.

9. Babyträger nach Anspruch 7 oder 8, **dadurch gekennzeichnet, dass** ein Kupplungselement zwischen dem Bolzen oder der Buchse des Schwenklagers (15) der Hebevorrichtung (11) und dem beweglichen Lagerteil des Tragebügels (17) vorgesehen ist, das manuell bedienbar ist, und zwar derart, dass es in einem eingerückten Zustand die beiden verschwenkbaren Teile miteinander verbindet und in der anderen Stellung diese voneinander entkoppelt, so dass der Tragebügel (17) unabhängig von dem Verstellen der Hebevorrichtung (11) verschwenkbar ist.

10. Babyträger nach einem der vorhergehenden Ansprüche, **dadurch gekennzeichnet, dass** die Hebevorrichtung aus zwei seitlich angeordneten Segmentscheiben besteht, die je einen langen Schenkel und einen kürzeren Schenkel aufweisen, an deren Ecke die Schwenkachse (15) vorgesehen ist, und dass die Kulisse (10) in die Segmentscheibe eingearbeitet und/oder auf diese aufgesetzt ist und zwischen den äußeren Schenkelenden gestreckt bogenförmig verläuft.

11. Babyträger nach Anspruch 10, **dadurch gekennzeichnet, dass** in die Kulisse (10) Rastsenken eingearbeitet sind, die zwischen der Sitz- und Liegeposition Zwischenstellungen ermöglichen.

12. Babyträger nach Anspruch 1, **dadurch gekennzeichnet, dass** an dem Schalensitz (1) untenseitig an den Seitenwänden (3a, 3b) oder dem Bodenteil Befestigungsvorrichtungen (18) zum Fixieren des Babyträgers an Fixpunkten eines Kinderwagens oder eines ISOFIX-Basisträgers an einem Fahrzeugsitz in einem Kraftfahrzeug vorgesehen sind.

13. Babyträger nach einem der vorhergehenden Ansprüche, **dadurch gekennzeichnet, dass** achsmittig aus der Ebene des Sitzelementes (5) ein Schrittgurt (27) für ein Hosenträgergurtsystem an dem Rückenlehnenelement (6) vorsteht, dessen vorstehende Länge in Abhängigkeit von der Sitz- und Liegeposition des Sitzelementes (5) einstellbar ist.

14. Babyträger nach Anspruch 13, **dadurch gekennzeichnet, dass** der Schrittgurt (27) in Abhängigkeit von der Sitz- und Liegeposition des Sitzelementes (5) einstellbar ist und mit seinem unteren Ende unterhalb, vor oder hinter der Schwenkachse (22) des Sitzelementes. (5) an der Stirnwand (4b) befestigt ist und um ein Führungselement gelegt oder durch ein schlitzförmiges Führungselement (28) hindurchgeführt ist und dass das Führungselement (28) in einer Führungsausnehmung (29) in dem Sitzelement (5) verschiebbar gelagert und mindestens in zwei beabstandete Endpositionen innerhalb der Führungsausnehmung (29) verbringbar ist.

15. Babyträger nach Anspruch 13 oder 14, **dadurch gekennzeichnet, dass** das Führungselement (28) in seitlichen Rastreihen längs der Führungsausnehmung (29) verschiebbar und positionierbar gelagert ist.

16. Babyträger nach Anspruch 13 oder 14, **dadurch gekennzeichnet, dass** an dem Führungselement (28) vorderseitig ein Gurt (30) befestigt und in oder an der Stirnwand (4b) umgelenkt und durch einen Führungsdurchbruch in den Innenraum des Schalensitzes (1) geführt ist und nach Umlenkung im Bereich unterhalb des Endes (8) des Sitzelementes (3) nach oben am Sitzelement (5) oder am Rückenlehnenelement (6) befestigt ist.

## Claims

1. Baby carrying device in the form of a shell (1), consisting of a base part (2), side walls (3a, 3b) and end walls (4a, 4b), in which a seat element (5) and a backrest element (6) are integrated, of which at least one is mounted to be adjustable in angle of inclination, and with a carrying yoke (17) pivotably mounted at the side walls (3a, 3b) substantially on the centre-of-gravity axis of the baby carrying device and lockable at least in the perpendicular carrying setting wherein the seat element (5) or backrest element (6) adjustable in angle of inclination is mounted by the outer upper end (7) thereof at the associated end wall (4b) to be pivotably movable about an axis extending transversely to the longitudinal axis of the baby carrying device, **characterised in that** the other, inner, lower end (8) of the seat element (5) or backrest element (6) is operatively connected with laterally outwardly projecting bearing pins (9) in gate guides (10) of respectively manually actuable lifting devices (11) pivotably mounted at the side walls (3a, 3b), by means of which the pivotably mounted element (5, 6) is adjustable in height from a lowered seating position into a lying position.

2. Baby carrying device according to claim 1, **characterised in that** that element (6) which is not mounted by the end thereof at the associated end wall about a horizontal pivot axis displaceably bears by this end (12) against the associated side wall (4a) or is laterally guided in X-shaped guides at the inner sides of the side walls (3a, 3b) and is mounted by the other end at the other element (5) to be pivotably movable.

3. Baby carrying device according to claim 2, **characterised in that** a sliding surface or a bulge-shaped slide element is provided to extend transversely at the end wall (4a) against which the backrest element (6) displaceably bears.

4. Baby carrying device according to claim 2, **characterised in that** the axis of rotation of the two interconnected seat and backrest elements (5, 6) is provided on the inner pivot axis of the element (5), which is pivotably connected with the end wall (4b) and formed by the two protruding lateral pins (9).

5. Baby carrying device according to claim 2, **characterised in that** at least one cut-out (14) in which the end (13) of the lower section of the backrest (6) engages in hinge-like manner and is connected by means of connecting pins is provided in the seat element (5) in the region of the axis of rotation.

6. Baby carrying device according to claim 1 or 2, **characterised in that** the pivot axis (15) of the lifting device (11) lies congruently with the pivot axis of the carrying yoke (17) and that the axis of the carrying yoke (17) is connected with the pivot axis (15) of the lifting device (11) by way of a fixed or releasable coupling.

7. Baby carrying device according to claim 6, **characterised in that** in the carrying setting of the carrying yoke (17) the two elements (5, 6) adopt the seat setting and on rearward pivotation of the carrying yoke (17) in the direction of the rearward end surface (4a) by way of the gate guides not only the seat element (5), but also the backrest element (6), which displaceably bears at one side against the end wall, can be raised up into a lying position.

8. Baby carrying device according to any one of the preceding claims, **characterised in that** the carrying yoke (17) is pivotably mounted at the inner side or outer side at the side walls (3a, 3b).

9. Baby carrying device according to claim 7 or 8, **characterised in that** a coupling element is provided between the pin or the bush of the pivot bearing (15) of the lifting device (11) and the movable bearing part of the carrying yoke (17) and is manually operable, in particular in such a manner that in an engaged state it connects together the two pivotable parts and in the other setting uncouples these from one another so that the carrying yoke (17) is pivotable independently of the adjustment of the lifting device (11).

10. Baby carrying device according to any one of the preceding claims, **characterised in that** the lifting device consists of two laterally arranged segment discs which each have a long limb and a shorter limb, at the corner of which the pivot axis (15) is provided, and that the gate guide (10) is formed in the segment disc and/or mounted thereon and runs elongated in an arcuated way between the outer limb ends.

11. Baby carrying device according to claim 10, **characterised in that** detent depressions enabling intermediate settings between the seating position and lying position are formed in the gate guides (10).

12. Baby carrying device according to claim 1, **characterised in that** fastening devices (18) for fixing the baby carrying device to fixing points of a child carriage or an ISOFIX base support at a vehicle seat in a motor vehicle are provided at the bucket seat (1) at the lower side at the side walls (3a, 3b) or the base part.

13. Baby carrying device according to any one of the preceding claims, **characterised in that** a step belt (27) for a harness belt system at the backrest element (6) protrudes axially centrally from the plane of the seat element (5), the protruding length of which is settable in dependence on the seating position and lying position of the seat element (5).

14. Baby carrying device according to claim 13, **characterised in that** the step belt (27) is settable in dependence on the seating position and lying position of the seat element (5) and is fastened by its lower end to the end wall (4b) below, in front of or behind the pivot axis (22) of the seat element (5) and is placed around a guide element or guided through a slot-shaped guide element (28) and that the guide element (28) is displaceably mounted in a guide recess (29) in the seat element (5) and can be brought into at least two spaced-apart end positions within the guide recess (29).

15. Baby carrying device according to claim 13 or 14, **characterised in that** the guide element (28) is mounted in lateral detent rows to be displaceable and positionable along the guide recess (29).

16. Baby carrying device according to claim 13 or 14, **characterised in that** a belt (30) is fastened to the guide element (28) at the front side and deflected in or at the end wall (4b) and is guided through a guide passage into the interior space of the bucket seat (1) and after deflection in the region below the end (8) of the seat element (3) is fastened at the top to the seat element (5) or to the backrest element (6).

## Revendications

1. Support d'enfant dans la forme d'une coquille (1), composé d'une pièce de fond (3), de parois latérales (3a, 3b) et frontales (4a, 4b) dans lequel un élément d'assise (5) et un élément de dossier (6) sont intégrés, dont au moins un est disposé de manière réglable dans un angle d'inclinaison et avec un arceau de transport (17) monté pivotant sur les parois latérales (3a, 3b) essentiellement sur l'axe du centre de gravité du support d'enfant et au moins blocages dans la position verticale de transport, l'élément d'assise (5) ou de dossier (6) réglable dans l'angle d'inclinaison avec son extrémité supérieure extérieure (7) sur la paroi frontale (4b) monté pivotant autour d'un axe situé à la transversale de l'axe en longueur du support d'enfant, caractérisé en cela que l'autre extrémité, intérieure, inférieure (8) de l'élément d'assise (5) ou de dossier (6) se trouve en interaction avec des boulons de palier (9) en saillie vers l'extérieur sur le côté dans des coulisses (10) respectivement sur un dispositif de levage (11) à actionnement manuel monté pivotant sur les parois latérales (3a, 3b), ceci permettant d'être réglé en hauteur à partir d'une position assise abaissée dans une position allongée avec l'élément étant monté pivotant (5, 6).

2. Support d'enfant selon la revendication 1 caractérisé en cela que l'élément (6) qui n'est pas monté autour d'un axe de pivotement horizontal avec son extrémité contre la paroi frontale attribuée, est placé avec cette extrémité (12) de manière à coulisser contre la paroi frontale (4a) attribuée ou est conduit latéralement dans des guidages en forme de X dans les côtés intérieurs des parois laterales (3a, 3b) et est monté pivotant avec l'autre extrémité (13) de manière à basculer sur l'autre élément (5).

3. Support d'enfant selon la revendication 2 caractérisé en cela qu'a la paroi frontale (4a) sur laquelle l'élément de dossier (6) est placé de manière à coulisser, une surface glissante ou un élément glissant en forme de bourrelet est prévu dans le sens transversal.

4. Support d'enfant selon la revendication 2 caractérisé en cela que sur l'axe de pivotement intérieur de l'élément (5) qui est appuyé sur la paroi frontale (4b) et qui est formé par les deux boulons saillants, latérales (9), l'axe de rotation des deux éléments d'assise (5) et de dossier (6) reliés ensemble est prévu.

5. Support d'enfant selon la revendication 2 caractérisé en cela que dans l'élément d'assise (5) au moins un évidement (14) est prévu dans la zone de l'axe de rotation dans lequel l'extrémité (13) de la section inférieure du dossier (6) agit telle une charnière et est reliée par des boulons de liaison.

6. Support d'enfant selon la revendication 1 ou 2 caractérisé en cela que l'axe de pivotement (15) du dispositif de levage (11) est situé de manière congruente à l'axe de pivotement de l'arceau de transport (17) et que via une couplage fixe ou amovible, l'axe de l'arceau de transport (17) est relié à l'axe de pivotement (15) du dispositif de levage (11).

7. Support d'enfant selon la revendication 6 caractérisé en cela que dans la position de transport de l'arceau de transport (17) les deux éléments (5, 6) prennent la position assise et qu'en cas de pivotement inverse de l'arceau de transport (17) en direction de la surface frontale arrière (4a) via les coulisses, aussi bien l'élément d'assise (5) que celui de dossier (6), qui peut être glissé sur un côté contre la paroi frontale, peuvent être soulevés vers le haut en position allongée.

8. Support d'enfant selon l'une des revendications précédentes caractérisé en cela que l'arceau de transport (17) est monté pivotant à l'intérieur ou à l'extérieur contre les parois latérales (3a, 3b).

9. Support d'enfant selon la revendication 7 ou 8 caractérisé en cela qu'un élément de couplage est prévu entre le boulon ou le connecteur du palier de pivotement (15) du dispositif de levage (11) et la pièce mobile du palier de l'arceau de transport (17), qui est commandé manuellement de sorte à ce que dans un état inséré il connecte les deux pièces pivotantes ensemble et les découple l'une de l'autre dans une autre position si bien que l'arceau de transport (17) peut être pivoté indépendamment du réglage du dispositif de levage (11).

10. Support d'enfant selon l'une des revendications précédentes caractérisé en cela que le dispositif de levage est composé de deux disques disposés latéralement qui présentent respectivement une patte longue et une patte plus courte, au coin desquelles l'axe de pivotement (15) est prévu, et en cela que la coulisse (10) est intégré dans le disque et/ou est placé sur celui-ci et passe étendue en forme d'arc entre les deux extrémités de pattes.

11. Support d'enfant selon la revendication (10) caractérisé en cela que dans la coulisse (10) des cuvettes enfichables sont intégrées qui permettent des positions intermédiaires entre la position d'assise et la position allongée.

12. Support d'enfant selon la revendication 1 caractérisé en cela que sur la coquille (1) sur la partie inférieure contre les parois latérales (3a, 3b) ou sur la pièce de fond, des dispositifs de fixation (18) sont prévus pour fixer le support d'enfant contre les points de fixation d'une poussette ou d'un porteur de base ISOFIX sur le siège auto d'un véhicule.

13. Support d'enfant selon l'une des revendications précédentes caractérisé en cela qu'au milieu de l'axe, au niveau de l'élément d'assise (5) une sangle d'entrejambe (27) est située pour un système de sangle de bretelle sur l'élément de dossier (6) dont la longueur située en avant peut être réglée en fonction de la position assise et la position allongée de l'élément d'assise (5).

14. Support d'enfant selon la revendication 13 caractérisé en cela que la sangle d'entrejambe (27) peut être réglée en fonction de la position assise et la position allongée de l'élément d'assise (5) et est fixé avec son extrémité inférieure sous, devant ou derrière l'axe de pivotement (22) de l'élément d'assise (5) contre la paroi frontale (4b) et est placé autour d'un élément de guidage ou est conduit à travers un élément de guidage (28) en forme de fente et en cela que l'élément de guidage (28) est situé dans un évidement de guidage (29) de manière à glisser dans l'élément d'assise (5) et peut être placé dans au moins deux positions finales espacés dans l'évidement de guidage (29).

15. Support d'enfant selon la revendication 13 ou 14 caractérisé en cela que l'élément de guidage (28) est déplacé et positionné dans des rangées enclenchables latérales dans le sens de la longueur de l'évidement de guidage (29).

16. Support d'enfant selon la revendication 13 ou 14 caractérisé en cela que sur l'élément de guidage (28) sur l'avant une ceinture est fixée (30) et est déviée dans ou contre la paroi frontale (4b) et est guidée à travers une percée de guidage dans l'espace intérieur de la coquille (1) et est fixé, après déviation, dans la zone sous l'extrémité (8) de l'élément d'assise (3) vers le haut sur l'élément d'assise (5) ou sur l'élément de dossier (6).
